Europäisches Patentamt

European Patent Office

Office européen des brevets

(19)

(11) Veröffentlichungsnummer : **0 103 747**
**B1**

(12) **EUROPÄISCHE PATENTSCHRIFT**

(45) Veröffentlichungstag der Patentschrift :
27.07.88

(21) Anmeldenummer : **83108082.5**

(22) Anmeldetag : **16.08.83**

(51) Int. Cl.⁴ : **G 01 G   3/12**, G 01 G   7/02,
G 01 G 23/00, G 01 G 23/01

(54) **Wägezelle.**

(30) Priorität : **20.08.82 DE 3230998**

(43) Veröffentlichungstag der Anmeldung :
**28.03.84 Patentblatt 84/13**

(45) Bekanntmachung des Hinweises auf die Patenterteilung : **27.07.88 Patentblatt 88/30**

(84) Benannte Vertragsstaaten :
**CH DE FR GB LI NL**

(56) Entgegenhaltungen :
**CH-A- 5 621 409**
**FR-A- 1 578 517**
**GB-A- 1 113 992**
**US-A- 3 201 983**
**US-A- 3 556 237**

(73) Patentinhaber : **Mettler Instrumente GmbH**
**Ockerweg 3**
**D-6300 Giessen (DE)**

(72) Erfinder : **Kusmenskji, K.H., Dipl.-Ing.**
**Paul-Hutten-Ring 36**
**D-6301 Pohlheim (DE)**
Erfinder : **Beck, Harald**
**Steinberger Strasse 7**
**D-6301 Pohlheim 5 (DE)**

(74) Vertreter : **Missling, Arne, Dipl.-Ing. et al**
**Patentanwälte Dipl.-Ing. R. Schlee Dipl.-Ing. A. Mis-**
**sling Bismarckstrasse 43**
**D-6300 Giessen (DE)**

**Beschreibung**

Die Erfindung bezieht sich auf eine Wägezelle, bei der die Gewichtskräfte der Last durch Verformung oder elektromechanische Kräfte kompensiert werden, mit einem mechanisch-elektrischen Meßgrößenumformer, mit einem die Last aufnehmenden Lastträger, einer Lastmeßzelle und einem Beschleunigungsmesser, der die gleichen vertikalen Beschleunigungen wie die Wägezelle erfährt, wobei die Lastzelle und der Beschleunigungsmesser elektrisch derart miteinander verschaltet sind, daß das durch die Beschleunigungseinwirkung verfälschte Meßsignal entsprechend korrigiert wird.

Wägezellen der vorstehend genannten Art weisen die nachteilige Eigenschaft auf, daß sie bei Erschütterungen ihres Aufstellortes mit Meßwertverfälschungen reagieren. Die Ursache hierfür sind die Kräfte, die infolge der Massenbeschleunigung auf die mechanischen Elemente der Waagen sowie auf die zu bestimmende Masse einwirken. Wägezellen der hier infrage stehenden Art, d. h. solche, die praktisch weglos arbeiten, sind derartigen Störungen wesentlich stärker unterworfen, als wegemessende Systeme, wie z. B. Federwaagen.

Die eingangs beschriebenen Wägezellen müssen auch an solchen Orten einwandfrei arbeiten, an denen sie starken Erschütterungen ausgesetzt sind. Wollte man die Erschütterungen allein dadurch wirkungslos halten, daß man die Waage entsprechend konstruiert, d. h. alle Hebelelemente von Lasteinleitung und Meßwandler dynamisch auswuchtet, ihre Schwerpunkte auf eine Achse bezieht oder gar zur Kongruenz bringt, so würde dies einen äußerst erheblichen Aufwand bedeuten, der zudem nicht zu einem hundertprozentigen Erfolg führen wird. Die andere Möglichkeit besteht darin, die Störungen im Meßsignal durch Einsatz von geeigneten Filterschaltungen zu eliminieren. Der Einsatz derartiger Filter bringt jedoch den Nachteil von unerwünscht langen Meßzeiten mit sich.

Wägezellen der hier infrage stehenden Art werden auch in Verpackungsmaschinen und automatischen Kontrollwaagen eingesetzt. Dies bedeutet, daß die meßzeiten sehr klein sein müssen. Diese Zeiten sollen geringer als 0,1 s sein. Eine Wägezelle mit elektromagnetischer Kraftkompensation, die praktisch weglos arbeitet und bei der alle wirksamen Elemente, einschließlich der Waagschale und dem Meßobjekt, mit Masse behaftet sind, stellt einen fast idealen Beschleunigungsaufnehmer für vertikale, translatorische Schwingungen dar. Dies gilt insbesondere für tiefe Störfrequenzen. Andererseits erfordern gerade tiefe Störfrequenzen bei Nachschaltung elektronischer Filter eine hohe Einspielzeit für den Meßvorgang.

Aus der DE-PS 17 74 137 ist eine elektrische Wägevorrichtung für sich bewegende Lasten bekannt, bei der einer Lastmeßzelle ein Beschleunigungsmesser derart zugeordnet ist, daß er die gleichen vertikalen Beschleunigungen erfährt.

Lastzelle und Beschleunigungsmesser liegen in der gleichen elektrischen Schaltung und sind derart miteinander verschaltet, daß der durch die Beschleunigung hervorgerufene Störfaktor eliminiert werden soll. Eine derartige Waage soll auf Schiffen eingesetzt werden, um den Fang auch bei Schrägstellung und Seegang wiegen zu können. Die Besonderheit dieser Lösung besteht darin, daß der Beschleunigungsmesser die an die Lastzelle gelieferte Spannung ändert, wobei der Beschleunigungsmesser in Reihe mit dem Ausgangskreis der Lastzelle geschaltet sein soll. Bei dem Ausführungsbeispiel ist die Hängewaage nach dem Dehnungsmeßstreifenprinzip ausgelegt, d. h. diese bildet also einen Quasi-Kraftmesser, während der Beschleunigungsmesser als potentiometrischer Weggeber konzipiert ist. Hier wird versucht, das Ausgangssignal einer Waage, die für Erschütterungen einen Beschleunigungsmesser darstellt, mit dem Ausgangssignal eines Wegmesser zu kompensieren. Dies funktioniert nur bei einer ganz bestimmten Frequenz zufriedenstellend. Im übrigen wirkt die Beschleunigungskompensation nur für einen bestimmten Lastfall.

Aus der CH-A-5-621 409 ist ein elektrischer Massenmesser mit einem Lastteil und einem Referenzteil sowie mit einer Schaltung zur Verarbeitung von Signalen des Last- und des Referenzteils bekannt, wobei bei der Verarbeitung eine Verhältnisbildung zur Lieferung des Meßergebnisses durchgeführt wird. Die Verarbeitungsschaltung enthält eine Verknüpfungsschaltung, welche die Signalflußpfade zwischen den Kraftmessern und dem Dividierer verknüpft, und zwar in der Weise, daß dem Referenzsignal ein lastabhängiges Signal des Lastpfades zugeführt wird. Dieser bekannte Massenmesser benötigt zwei gleiche Waagen, wobei auf die eine Waage die zu wägende Masse und auf die zweite Waage das Referenzgewicht aufgelegt wird. Es handelt sich hier um eine Kompensation der Störsignale für eine ganz bestimmte Referenzmasse. Der Abgleich erfolgt gleichfalls nur im Verhältnis zu einer ganz bestimmten Masse, die im mittleren Bereich des Wägespektrums liegt. Werden hiervon abweichende Massen gewogen, so ist die Störkompensation nicht mehr in dem maximal möglichen Ausmaß gegeben. Des weiteren ist das Prinzip von zwei Waagen in einer Waage technisch nur sehr schwer zu realisieren, da hier die Veränderung des Nullpunktes für beide Waagen kompensiert werden muß, d. h. es muß hier sowohl die additive als auch die multiplikative Komponente der Drift ausgeglichen werden.

Der Erfindung liegt die Aufgabe zugrunde, eine Wägezelle der eingangs genannten Art so auszubilden, daß zum einen auch bei tiefen Störfrequenzen ein einwandfreies Meßergebnis in kürzester Zeit erhalten wird und daß zum anderen für den gesamten Meßbereich der Wägezelle die Kompensation automatisch erhalten bleibt.

Dies wird gemäß einer ersten Lösung der Aufgabe dadurch erreicht, daß das vom Störsignal überlagerte Wägesignal einem Subtrahierer zugeführt wird, daß das vom Beschleunigungsmesser ausgehende Signal auf einen Wert abgeglichen und einem Multiplizierer zugeführt wird, daß dem Multiplizierer das vom Subtrahierer ausgehende bereinigte Ausgangssignal zugeführt wird, und daß das vom Multiplizierer erhaltene Signal dem Subtrahierer zugeführt wird.

Eine zweite Lösung der Erfindungsaufgabe ist dadurch gekennzeichnet, daß das vom Störsignal überlagerte Wägesignal einem Subtrahierer zugeführt wird, dem gleichfalls das vom Beschleunigungsmesser ausgehende Signal zugeführt wird, das derart verstärkt und abgeglichen ist, daß die additive Gewichtskraftkomponente ausgeglichen wird, daß ein zweites vom Beschleunigungsmesser ausgehendes und derart abgeglichenes Signal, daß die multiplikative Gewichtskraftkomponente kompensiert wird, einem zweiten Subtrahierer zugeführt wird, daß dem zweiten Subtrahierer gleichfalls eine Referenzspannung zugeführt wird, und daß die Ausgänge beider Subtrahierer einen Analog-Digital-Wandler zugeführt werden, der das bereinigte Ausgangssignal liefert.

Das von der Lastzelle ausgehende Störsignal (a), das dem Wägesignal (A) überlagert ist, rührt zum einen von einem konstanten Masseanteil der Wägezelle her, und zwar von den Hebeln, der Waagschale etc. und einem von der Last abhängigen Teil. Zwangsläufig muß auch das zur Kompensierung vom Beschleunigungsmesser gelieferte Signal (a) aus einer additiven und einer multiplikativen Komponente bestehen. Die Anpassung des vom Beschleunigungsmesser gelieferten Kompensationssignals (a) muß also auch der jeweiligen auf der Wägezelle aufgelegten Masse angepaßt sein. Dies kann gemäß der Erfindung dadurch erreicht werden, daß sowohl das vom Subtrahierer ausgehende Signal als auch das von dem Beschleunigungsmesser ausgehende und gegebenenfalls verstärkte Signal einem Multiplizierer zugeführt werden, wobei das Produkt aus diesen beiden Signalen gleich dem Störsignal (a) sein muß. Dieses Signal (a) wird dann wiederum dem Subtrahierer zugeführt. Diese Schaltung von Subtrahierer und Multiplizierer wirkt in der Form eines Dividierbausteins. Diese Lösung hat sich als besonders vorteilhaft herausgestellt, da einerseits ein Abgleich für jede beliebige Last vorliegt und andererseits das bereinigte Signal (A) als Multiplikator verwendet wird.

Mit einer erfindungsgemäß ausgebildeten Meßzelle kann eine wesentliche Verbesserung im Störverhalten um den Faktor 20 und mehr erzielt werden.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen :

Fig. 1 einen Schnitt durch eine erfindungsgemäß ausgebildete Wägezelle,

Fig. 2 eine elektrische Schaltung für die Kompensierung des Störsignals gemäß der ersten Lösung der Erfindungsaufgabe und

Fig. 3 eine elektrische Schaltung für die Kompensierung des Störsignals gemäß der zweiten Lösung der Erfindungsaufgabe.

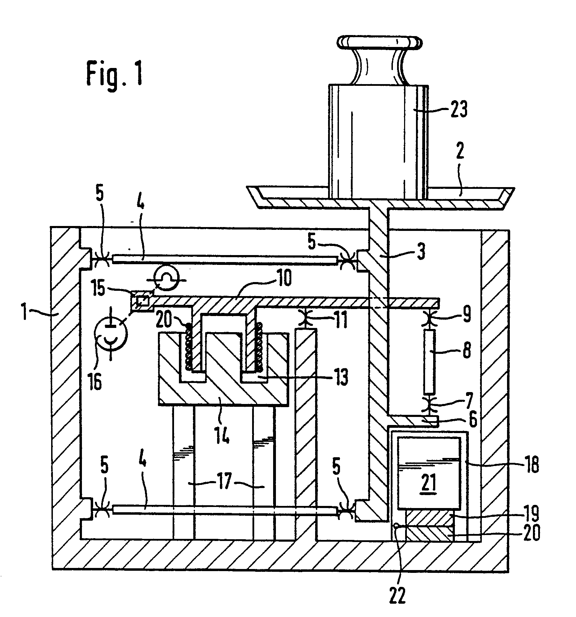

Fig. 1 zeigt eine Wägezelle im Schnitt, die ein stabiles Gehäuse 1 besitzt, das mit nicht dargestelltem Deckel verschließbar ist. Die Waagschale 2 ist an ein Gehänge 3 angeschlossen, das über zwei Lenker 4 geführt ist. Die beiden Lenker 4 sind sowohl am Gehänge 3 als auch am Gehäuse 1 über Biegelager 5 angeschlossen. Hierdurch wird erreicht, daß nur vertikale Bewegungen der Waagschale möglich sind.

An einer Lasche 6 des Gehänges 3 ist über ein weiteres Biegelager 7 ein Koppel 8 angeschlossen, deren anderes Ende über ein Biegelager 9 mit einem Hebel 10 verbunden ist. Der Drehpunkt des Hebels 10 wird durch ein Stehlager 11 gebildet.

Mit dem Hebel 10 ist eine elektrische Spule 12 verbunden, die in den Luftspalt 13 eines Permanentmagneten 14 eintaucht. Die Lage des freien Endes 15 wird von einem Nullagen-Abtaster 16 abgetastet, der im Ausführungsbeispiel aus einer Photodiode und einer Lichtquelle besteht. Der Permanentmagnet 14 ist über Ständer 17 fest mit dem Gehäuse 1 verbunden.

Im Gehäuse 1 der Wägezelle ist des weiteren ein Beschleunigungsmesser 18 angeordnet, der in unmittelbarer Nähe des Gehänges 3 liegt und so in dem Gehäuse eingebaut ist, daß dieser den gleichen Stößen ausgesetzt ist wie das Gehänge 3. Sofern der Platz ausreichend ist, wäre es vorteilhaft, den Beschleunigungsmesser 18 in Verlängerung des die Last aufnehmenden Gehänges 3 anzuordnen. Der Beschleunigungsmesser 18 besteht aus zwei piezoelektrischen Platten 19 und 20, die zwischen einer seismischen Masse 21 und dem Boden des Gehäuses 1 eingespannt sind. Wird die Wägezelle beschleunigt, so übt die seismische Masse 21 eine proportionale Kraft auf die piezoelektrischen Platten 19 und 20 aus. Diese geben eine ereignisanaloge Wechselspannung über den Anschluß 22 ab. Es handelt sich hier um ein Schwingsystem mit einem Freiheitsgrad in einer Richtung, die gleich der Lasteinleitung ist. Es ist auch denkbar, einen nach dem Transversaleffekt arbeitenden Beschleunigungsmesser zu verwenden.

Fließt durch die Spule 12 ein elektrischer Strom, so entsteht dadurch eine Kraft, die der Gewichtsbelastung entgegengesetzt ist. Mit dem photoelektrischen Nullagen-Abtaster kann eine definierte Einspiellage des Lastträgers erkannt werden. Bei einer Belastungsänderung, z. B. wenn ein Gewicht 23 auf die Waagschale aufgesetzt wird, verändert ein Regler mit Verstärker den durch die Spule fließenden Strom solange, bis die Einspiellage, d. h. die Nullage, wieder erreicht ist.

Zur Kompensation der Gewichtskraft wird bei der beschriebenen Wägezelle ein Strom durch die Spule geleitet.

Über einen nicht dargestellten Meßwiderstand in diesem Stromkreis wird eine Signalspannung abgegriffen, die direkt proportional der Belastung ist.

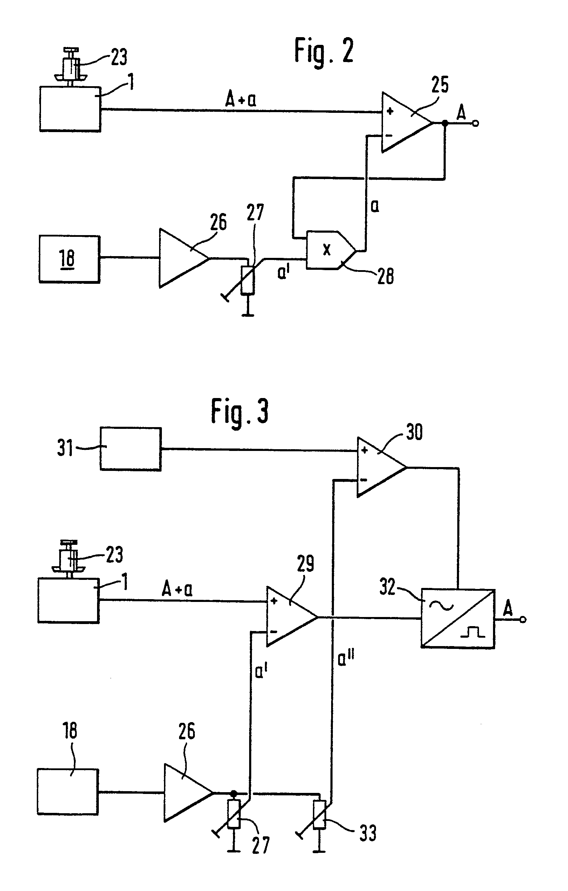

Dieses von der Wägezelle ausgehende und von der Belastung herrührende Signal, das sich aus dem Wägesignal (A) und einem überlagerten Störsignal (a) zusammensetzt, wird einem Subtrahierer 25 zugeführt. Das vom Anschluß 22 des Beschleunigungsmessers 18 kommende Signal wird einem Meßverstärker 26 zugeführt und entsprechend verstärkt und an einem Einsteller 27 abgeglichen. Dieser Abgleich wird im Falle des Ausführungsbeispiels nach Fig. 2 so durchgeführt, daß ein Signal (a) erhalten wird. Dieses Signal wird dem Subtrahierer zugeführt. Bei Durchführung des Abgleichs muß die variable Last (A) berücksichtig werden. Zum Abgleich wird ein am Ausgang des Einstellers auftretendes Signal a' verwendet. Dieses Signal a' wird einem Multiplizierer 28 zugeführt, an dem gleichfalls das bereinigte Signal A anliegt, das am Ausgang des Subtrahierers 25 abgenommen wird. Für den Abgleich des Systems muß a' so eingestellt sein, daß die Bedingung a = a' × A erfüllt wird. Das Ausgangssignal a des Multiplizierers 28 wird dann dem Subtrahierer 25 zugeführt, so daß am Ausgang des Subtrahierers das bereinigte Wägesignal A erhalten wird.

Die Wägezelle liefert als Ausgangssignal somit ein Wägesignal A, das mit einem Störsignal a überlagert ist. Da die Waage mit einem konstanten Masseanteil, bestehend aus Hebel, Waagschale etc. und mit der zu bestimmenden veränderlichen Masse 23 behaftet ist, muß das Kompensationssignal a gleichfalls, um eine optimale Kompensation zu erhalten, aus einer additiven und einer multiplikativen Komponente bestehen. Dies wird dadurch erreicht, daß das vom Störsignal bereinigte Signal A zur Erfassung der veränderlichen Masse zur Angleichung des von dem Beschleunigungsmesser gelieferten Signals herangezogen wird.

Bei der Schaltung nach Fig. 3 wird das vom Störsignal a überlagerte Wägesignal A + a ebenfalls einem hier mit 29 bezeichneten Subtrahierer zugeführt, der ein vom Beschleunigungsmesser 18 ausgehendes Signal a' erhält, das ebenfalls über einen Verstärker 26 verstärkt und über einen Einsteller 27 abgeglichen wird. Unterschiedlich gegenüber der Schaltung nach Fig. 2 ist, daß vom Beschleunigungsmesser 18 ein zweites Signal a'' ausgeht, das über einen Einsteller 33 abgeglichen und einem zweiten Subtrahierer 30 zugeführt wird. Die Abgleichung ist derart, daß die multiplikative Gewichtskraftkomponente kompensiert wird. Dem zweiten Subtrahierer wird auch eine Referenzspannung zugeführt. Die Ausgänge beider Subtrahierer 29 und 30 werden einem Analog-Digital-Wandler 32 zugeführt, der das bereinigte Ausgangssignal A liefert.

Versuche haben ergeben, daß mit der erfindungsgemäßen Einrichtung und Kompensierung eine Verbesserung des Störverhaltens um mehr als den Faktor 20 erhalten wird, und dies bei gleichbleibend kleinen Einspielzeiten. Dieser Vorteil ist insbesondere für tiefe Frequenzen gegeben. Bei den höheren Frequenzen wird zwar eine gewisse Abnahme der Störungsimmunität beobachtet, jedoch ist dies von untergeordneter Bedeutung, denn für diese höheren Frequenzen ist es ohne weiteres möglich, Filter nachzuschalter, ohne daß die Meßzeit nennenswert verlängert wird.

**Patentansprüche**

1. Wägezelle, bei der die Gewichtskräfte der Last durch Verformung oder elektromechanische Kräfte kompensiert werden, mit einem mechanisch-elektrischen Meßgrößenumformer (15, 16), mit einem die Last (23) aufnehmenden Lastträger (2), einer Lastmeßzelle (13, 14, 20) und einem Beschleunigungsmesser (18), der die gleichen vertikalen Beschleunigungen wie die Wägezelle erfährt, wobei die Lastzelle und der Beschleunigungsmesser elektrisch derart miteinander verschaltet sind, daß das durch die Beschleunigungseinwirkung verfälschte Meßsignal entsprechend korrigiert wird, dadurch gekennzeichnet, daß das vom Störsignal (a) überlagerte Wägesignal (A + a) einem Subtrahierer (25) zugeführt wird, daß das vom Beschleunigungsmesser (18) ausgehende Signal auf einen Wert (a') abgeglichen und einem Multiplizierer (28) zugeführt wird, daß dem Multiplizierer das vom Subtrahierer (25) ausgehende bereinigte Ausgangssignal (A) zugeführt wird, und daß das vom Multiplizierer (28) erhaltene Signal (a) dem Subtrahierer (25) zugeführt wird.

2. Wägezelle, bei der die Gewichtskräfte der Last durch Verformung oder elektromechanische Kräfte kompensiert werden, mit einem mechanisch-elektrischen Meßgrößenumformer (15, 16), mit einem die Last (23) aufnehmenden Lastträger (2), einer Lastmeßzelle (13, 14, 20) und einem Beschleunigungsmesser (18), der die gleichen vertikalen Beschleunigungen wie die Wägezelle erfährt, wobei die Lastzelle und der Beschleunigungsmesser elektrisch derart miteinander verschaltet sind, daß das durch die Beschleunigungseinwirkung verfälschte Meßsignal entsprechend korrigiert wird, dadurch gekennzeichnet, daß das vom Störsignal (a) überlagerte Wägesignal (A + a) einem Subtrahierer (29) zugeführt wird, dem gleichfalls das vom Beschleunigungsmesser (18) ausgehende Signal (a') zugeführt wird, das derart verstärkt und abgeglichen ist, daß die additive Gewichtskraftkomponente ausgeglichen wird, daß ein zweites vom Beschleunigungsmesser ausgehendes und derart abgeglichenes Signal (a''), daß die multiplikative Gewichtskraftkomponente kompensiert wird, einem zweiten Subtrahierer (30) zugeführt wird, daß dem zweiten Subtrahierer gleichfalls eine Referenzspannung (31) zugeführt wird, und daß die Ausgänge beider Subtrahierer einem Analog-Digital-Wandler (32) zugeführt werden, der das bereinigte Ausgangssignal (A) liefert.

3. Wägezelle nach einem der Ansprüche 1 oder 2, dadurch gekennzeichnet, daß der Beschleunigungsmesser (18) als piezoelektrischer Wandler ausgebildet ist.

4. Wägezelle nach einem der Ansprüche 1 bis 3, dadurch gekennzeichnet, daß der Beschleunigungsmesser in eine Wägezelle mit elektromagnetischer Kraftkompensation eingebaut ist und daß der Beschleunigungsmesser entweder in Verlängerung der Krafteinleitung des zu bestimmenden Gewichtes oder in unmittelbarer Nähe derselben angeordnet ist.

## Claims

1. A weighing cell, in which the weight of the load is compensated by deformation or electromechanical forces, having a mechanico-electrical transducer (15, 16), a load carrier (2) receiving the load (23), a load-measuring cell (13, 14, 20) and an accelerometer (18) which is subjected to the same vertical acceleration as the weighing cell, the load cell and the accelerometer being electrically connected to each other in such a way that the measurement signal distorted by the effects of acceleration are corrected accordingly, characterized in that the weighing signal (A + a) with the interference signal (a) superimposed thereon is supplied to a subtractor (25), the signal emitted by the accelerometer (18) is adjusted to a value (a') and supplied to a multiplier (28), the corrected output signal (A) emitted by the subtractor (25) is supplied to the multiplier, and the signal (a) obtained from the multiplier (28) is supplied to the subtractor (25).

2. A weighing cell, in which the weight of the load is compensated by deformation or electromechanical forces, having a mechanico-electrical transducer (15, 16), a load carrier (2) receiving the load (23), a load-measuring cell (13, 14, 20) and an accelerometer (18) which is subjected to the same vertical acceleration as the weighing cell, the load cell and the accelerometer being electrically connected to each other in such a way that the measurement signal distorted by the effects of acceleration are corrected accordingly, characterized in that the weighing signal ( A + a) with the interference signal (a) superimposed thereon is supplied to a subtractor (29), to which is likewise supplied the signal (a') emitted by the accelerometer (18) which is amplified and adjusted in such a way that the additive weight component is compensated, a second signal (a''), which is emitted by the accelerometer and adjusted in such a way that the multiplicative weight component is compensated, is supplied to a second subtractor (30), a reference voltage (31) is likewise supplied to the second subtractor, and the outputs of both subtractors are supplied to an analog-digital converter (32) which delivers the corrected output signal (A).

3. A weighing cell according to one of Claims 1 or 2, characterized in that the accelerometer (18) is constructed as a piezoelectric transducer.

4. A weighing cell according to any one of Claims 1 to 3, characterized in that the accelerometer is fitted in a weighing cell with electromagnetic force compensation, and the accelerometer is arranged either in an extension of the force introduction of the weight to be determined or in the immediate vicinity thereof.

## Revendications

1. Capteur de pesage, dans lequel le poids de la charge est compensé par une déformation ou par des forces électromécaniques, comprenant un convertisseur mécanique-électrique de mesure (15, 16), un support de charge (2) recevant la charge (23), un capteur de mesure du poids (13, 14, 20) et un accéléromètre (18) qui subit les mêmes accélérations verticales que le capteur de pesée, le capteur de mesure du poids et l'accéléromètre étant reliés électriquement ensemble de façon que le signal de mesure altéré par l'effet de l'accélération soit corrigé en conséquence, caractérisé en ce que le signal de pesée (A + a) augmenté du signal parasite (a) est transmis à un soustracteur (25), en ce que le signal sortant de l'accéléromètre (18) est ramené à une valeur (a') et transmis à un multiplicateur (28), en ce que le signal de sortie (A) sortant du soustracteur (25) et épuré est transmis au multiplicateur, et en ce que le signal (a) fourni par le multiplicateur (28) est transmis au soustracteur (25).

2. Capteur de pesage, dans lequel le poids de la charge est compensé par une déformation ou par des forces électromécaniques, comprenant un convertisseur mécanique-électrique de mesure (15, 16), un support de charge (2) recevant la charge (23), un capteur de mesure du poids (13,1 4, 20) et un accéléromètre (18) qui subit les mêmes accélérations verticales que le capteur de pesée, le capteur de mesure du poids et l'accéléromètre étant reliés électriquement ensemble de façon que le signal de mesure altéré par l'effet de l'accélération soit corrigé en conséquence, caractérisé en ce que le signal de pesée (A + a) augmenté du signal parasite (a) est transmis à un soustracteur (29) auquel est également transmis le signal (a') sortant de l'accéléromètre, qui est amplifié et réduit, de façon à compenser la composante additionnelle du poids, en ce qu'un deuxième signal (a'') sortant de l'accéléromètre et réduit de façon à compenser la composante de multiplication du poids, est transmis à un deuxième soustracteur (30), en ce qu'une tension de référence (31) est également transmise au deuxième soustracteur, et en ce que les signaux de sortie des deux soustracteurs sont transmis à un convertisseur analogique/numérique (32) qui fournit le signal de sortie épuré (A).

3. Capteur de pesage selon la revendication 1 ou 2, caractérisé en ce que l'accéléromètre (18) est constitué sous forme d'un convertisseur piézo-électrique.

4. Capteur de pesage selon l'une des revendications 1 à 3, caractérisé en ce que l'accéléromètre est incorporé dans un capteur de pesée pourvu d'un moyen de compensation électromagnétique des forces et en ce que l'accéléromètre est disposé, soit dans le prolongement de l'introduction du poids à déterminer, soit dans son voisinage immédiat.

Fig. 1

# Fig. 2

# Fig. 3